# EUROPÄISCHE PATENTSCHRIFT

(11) **EP 4 211 322 B1**
(45) Veröffentlichungstag und Bekanntmachung des Hinweises auf die Patenterteilung: **27.03.2024**
(21) Anmeldenummer: 21765537.2
(22) Anmeldetag: 03.09.2021
(51) Int. Cl.: E04D 13/04, E04D 11/00

(54) **SYSTEM ZUR RÜCKHALTUNG, SPEICHERUNG UND WIEDERVERWENDUNG VON WASSER FÜR DÄCHER**
SYSTEM FOR RETAINING, STORING AND REUSING WATER, FOR ROOFS
SYSTÈME DE RETENUE, DE STOCKAGE ET DE RÉUTILISATION D'EAU, DESTINÉ AUX TOITS

(30) Priorität: 07.09.2020 IT 202000021106
(43) Veröffentlichungstag der Anmeldung: 19.07.2023
(73) Patentinhaber: Climagrün GmbH/Srl, 39100 Bolzano (IT)
(72) Erfinder: KORNPROBST, Klaus, 39100 Bolzano (IT); TROJER, Thomas, 39100 Bolzano (IT)
(74) Vertreter: Torggler & Hofmann Patentanwälte - Innsbruck
(86) Internationale Anmeldenummer: PCT/EP2021/074324
(87) Internationale Veröffentlichungsnummer: WO 2022/049224

(56) Entgegenhaltungen:
- CN-B- 108 019 001
- CN-U- 208 201 989
- CN-U- 209 653 243

## Beschreibung

Die vorliegende Erfindung betrifft ein System zur Rückhaltung, Speicherung und Wiederverwendung von Wasser für Dächer gemäß dem kennzeichnenden Teil von Anspruch 1.

Der Anwendungsbereich der vorliegenden Erfindung sind Dächer und andere Außenflächen von Gebäuden. Auf Gebäuden werden heute oft Rasenflächen und andere kultivierbare Flächen mit Pflanzen, Blumen, Gras und dergleichen angelegt.

Diese Flächen benötigen für ihren Anbau Wasser. Aus dem Stand der Technik sind eine Vielzahl von Systemen bekannt, die dazu dienen, das zur Bewässerung der Anbaufläche eingesetzte Wasser wieder nutzbar zu machen.

Seit EP 3 607 816 ist ein Wasserrückhalteelement bekannt, das unter einer insbesondere mit Pflanzen und/oder Gras bebauten Fläche angeordnet ist.

Dieses Element ist unterhalb der bearbeiteten Fläche angeordnet und das Element ist mit einer Oberflächenausdehnung ausgebildet, die eine Vielzahl von einzelnen Aussparungen aufweist, wobei die Aussparungen eine Bodenfläche haben und die einzelnen Elemente durch Nuten miteinander verbunden sind. Jedes Element hat Öffnungen an der Seite oder an der Unterseite. Das in den einzelnen Elementen gesammelte Wasser kann nicht zentral verwaltet werden, was insbesondere im Winter zu Problemen führen kann, wenn das Wasser gefriert oder bei übermäßigem Wasserdurchfluss nur durch die Öffnungen ein unzureichender Wasserdurchfluss möglich ist und somit Wasserschäden entstehen können.

EP 2 681 989 enthält ebenfalls ein ähnliches Element wie oben beschrieben mit den gleichen Problemen.

Auch EP 2 630 313 beschreibt ein Wasserabflusssystem zum Sammeln von Wasser, und am Boden der Sammelelemente befindet sich eine Öffnung für den Durchfluss von Wasser, das in der vorliegenden Offenbarung durch eine Schicht aus Filtermaterial fließt. Auch in diesem Fall findet die Filterung des Wassers nur am Boden des beschriebenen Elements statt und es ist schwierig, den Wasserfluss zentral zu steuern.

Die DE 10 111 413 ist ein Dachsystem zur Wasserableitung bekannt, aber es ist keine Fläche vorgesehen, auf der Gras oder ähnliches gepflanzt werden kann. Das beschriebene System dient lediglich dazu, die Wasserdichtigkeit des Daches zu gewährleisten. Darüber hinaus bieten die oben beschriebenen Systeme keinen ausreichenden Schutz für die Dachkonstruktion des Gebäudes, auf dem die Begrünung angebracht ist.

Ein Dachwasserrückhaltesystem ist bekannt aus CN 209 653 243. Um zu funktionieren, verfügt das in der CN 209 653 243 beschriebene System über eine Kammer, die nicht in direktem Kontakt mit der Kammer unterhalb des Rückhaltesystems steht.

Außerdem ist das Auffangsystem seitlich und unterhalb der Gehfläche angeordnet und nicht gleichmäßig über das gesamte Dach ausgebildet. Außerdem ist das System der CN 209 653 243, wie sich leicht ableiten lässt, für die Wasserversorgung der Pflanzen über einen zentralen Kanal ausgelegt, der die angrenzenden Flächen mit Wasser versorgt, und ist nicht für die Sammlung von Wasser, sondern hauptsächlich für die Bewässerung der Pflanzen von unten gedacht.

Die CN 208201989 und die CN 108019 001 sind ebenfalls als Wasserrückhaltesysteme auf dem Dach bekannt, die es jedoch nicht ermöglichen, ein kompaktes System zu schaffen, das unterhalb der Kulturschicht angeordnet ist und das Wasser effektiv nutzen kann.

Das System zur Rückhaltung, Speicherung und Wiederaufbereitung von Wasser umfasst eine erste Schicht, die auf einer im Wesentlichen flachen Außenfläche eines Gebäudes, vorzugsweise eines Daches oder dergleichen, angeordnet ist. Diese erste Schicht besteht aus einem Schutz, der gegen Pflanzenwurzeln, Bewuchs und dergleichen resistent und wasserdicht ist. Auf der ersten Schicht liegt eine zweite Schicht, die aus einer Schutzmatte/-schicht besteht, die den Boden einer Rückhaltekammer bildet, die die wasserdichte Schicht vor Beschädigungen beim Einbau und während der Lebensdauer des Systems schützt. Über die Matte/ Sicherheitsschicht/ Schutzdecke wird eine Struktur gelegt, die aus einer Reihe miteinander verbundener Elemente besteht, die eine tragende Struktur bilden. Die Sicherheitsschicht schützt auch die wasserdichte Schicht vor der Belastung durch die Konstruktion. Über der Tragkonstruktion wird ein durchlässiger Filtervlies angebracht, der das Wasser durchlässt. Durch die Platzierung des durchlässigen Filtervlieses über der Stützstruktur entsteht eine Oberfläche, die eine Tropfoberfläche bildet, auf der sich Tropfen bilden, die dann auf die Stützstruktur und/oder die wasserdichte Unterlage fallen. Über dem Filtervlies wird ein Substrat aus für den Anbau von Pflanzen geeignetem Material angebracht, und innerhalb dieser Schicht wird ein Bewässerungssystem angebracht, vorzugsweise ein Rohr, das eine Tropfbewässerung und/oder ein Sprühbewässerungssystem durchführt, oder alternativ inertes Material, z. B. Kies, durch das Regenwasser o. Ä. fließen kann.

Die zwischen der wurzelfesten/wasserdichten Schicht und dem durchlässigen Filz gebildete Kammer, die durch die Stützkonstruktion entsteht, soll Wasser sammeln und das Sediment sich auf dem Boden der wasserdichten Schicht über der wurzelfesten Schicht absetzen lassen. Die so gebildete Kammer ist direkt mit einer Sammelkammer verbunden, deren Boden tiefer als die Rückhaltekammer angeordnet ist. Der Sammelraum kann ein Teil des Rückhalteraums oder ein Sammelbereich sein. Auf diese Weise kann eine Pumpe in die Sammelkammer eingesetzt werden, insbesondere eine Tauchpumpe, die dazu dient, das Wasser in den Bewässerungskreislauf der Vegetation zurückzuführen, wenn das Wasser aus der Rückhaltekammer in die Sammelkammer fließt, oder die Tauchpumpe kann direkt in die Rückhaltekammer eingesetzt werden. Darüber hinaus befindet sich in der Sammelkammer oder der Rückhaltekammer mindestens ein Abfluss, durch den das Wasser bei übermäßigem Aufkommen oder alternativ in den Wintermonaten, insbesondere in kalten Gebieten, abgelassen werden kann, um Schäden durch Frost und gefrorenes Wasser, d. h. Eis, zu vermeiden, die zu Schäden an der Stützkonstruktion und/oder dem Filtervlies und/oder der Wurzelschutzschicht führen könnten.

Weitere Merkmale und Einzelheiten ergeben sich aus den Ansprüchen und der folgenden Beschreibung von Ausführungsformen, die in der beigefügten Zeichnung dargestellt sind, wobei diese zeigen:
Figur 1 zeigt einen Schnitt durch ein erstes erfindungsgemäßes Teilsystem,
Figur 2 zeigt einen Schnitt durch ein erfindungsgemäßes System,
Figur 3 zeigt einen Schnitt durch ein weiteres erfindungsgemäßes System, und

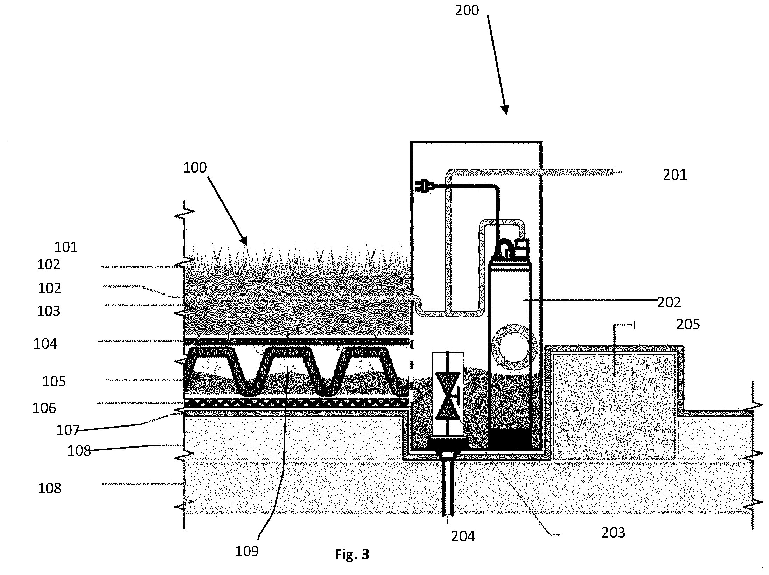

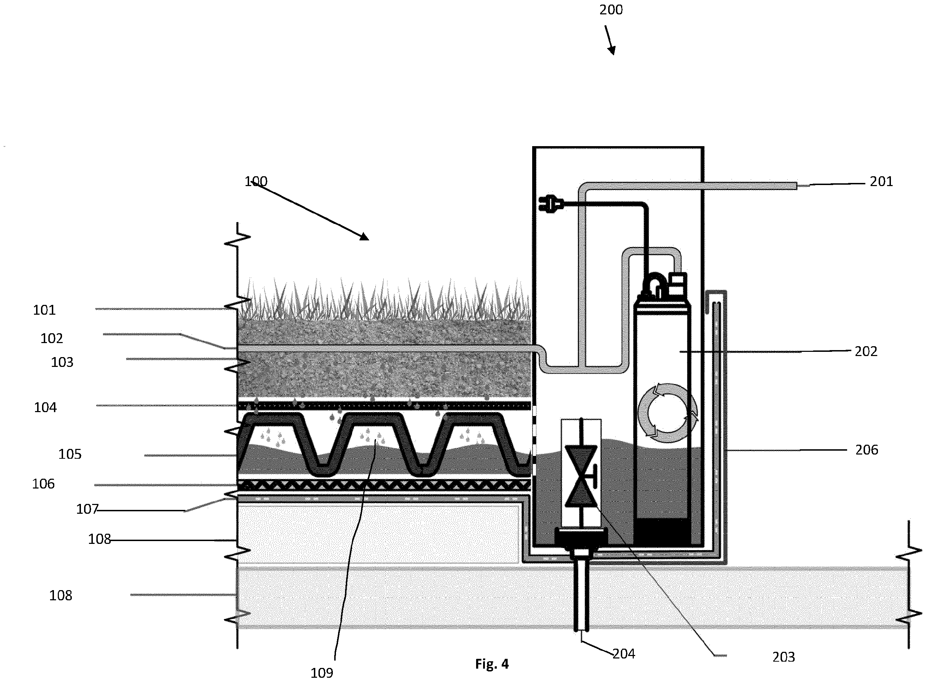

Figur 3 zeigt einen Schnitt durch ein weiteres erfindungsgemäßes System.

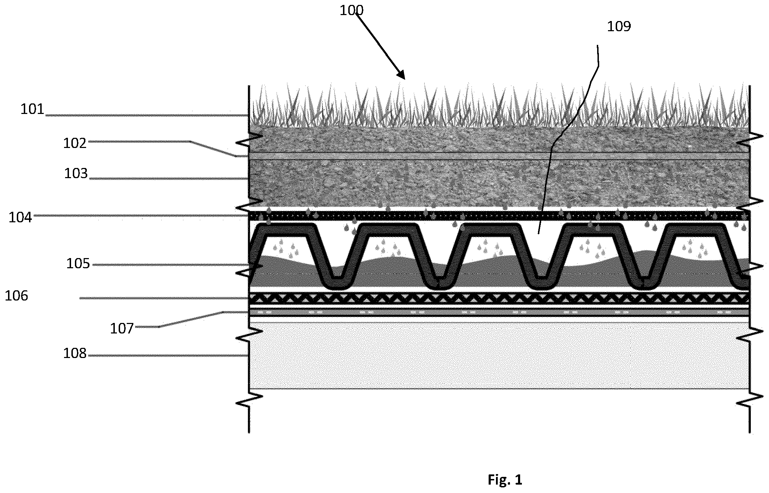

In Figur 1 ist ein erfindungsgemäßes Rückhaltesystem mit der Bezugsnummer 100 bezeichnet. Das erfindungsgemäße System wird auf einem Gebäude, einer Behausung oder dergleichen, insbesondere auf dem Dach eines Gebäudes angebracht und/oder bildet das Dach eines Gebäudes.

Auf einer Außenfläche des Gebäudes 108 ist eine wasserdichte Schutzschicht 107 insbesondere auch eine Schutzschicht gegen Wurzeln aufgebracht, auf dieser Schicht 107 ist eine Schicht aus einem Schutzmaterial 106, beispielsweise eine Folie aus einem Kunststoffmaterial, aufgebracht, die den Zweck erfüllt, einen Schutz für die Schicht 107 insbesondere gegen Beschädigungen, die bei der Montage auftreten, zu bilden und die Schicht 107 bildet den Boden für eine Wasserrückhaltekammer 109.

Auf der Schutzschicht 106 ist eine Stützstruktur 105 angeordnet, die vorzugsweise aus einzelnen Kunststoffelementen besteht, die Füße haben, die auf der Schutzfläche 106 aufliegen, und Seitenelemente, die die Höhe der Kammer bilden, sowie eine obere Fläche, die geeignet ist, eine Auflagefläche für ein Filtervlies 104 zu bilden. Die Schutzschicht 106 schützt die undurchlässige Schicht 107 vor dem Druck der Stützstruktur. Der Boden der von der Stützstruktur 105 gebildeten Kammer hat vorzugsweise keine oder höchstens eine Neigung von 5°. Darüber hinaus ermöglicht die so geschaffene Struktur eine Kammer, in der frei fließendes Wasser vorhanden ist, ohne jedoch die Struktur zu schwächen, so dass die Oberfläche des erfindungsgemäßen Systems 100 begehbar bleibt. Oberhalb des Filtervlieses 104 befindet sich eine Schicht aus Material 103 zur Kultivierung von Vegetation, Pflanzen und dergleichen, insbesondere Gras, Blumen 101 usw. oder inertes Material, z. B. Kies oder dergleichen. Vorteilhafterweise befindet sich in der Schicht 103 ein Bewässerungssystem 102. Vorzugsweise handelt es sich bei dem Bewässerungssystem 102 um eine Tropfbewässerung, d.h. die Pflanzen, das Gras und dergleichen werden über ein Tropfsystem bewässert. In einer Ausführungsform handelt es sich bei diesem System um ein Vlies-System, d.h. es verfügt über eine ausgedehnte Oberfläche eines Vlies, das über einen Tropfschlauch, der zwischen zwei Vlies eingelegt ist, mit Wasser versorgt wird, das sich dann tropfenweise auf den umliegenden Boden/Schicht verteilt.

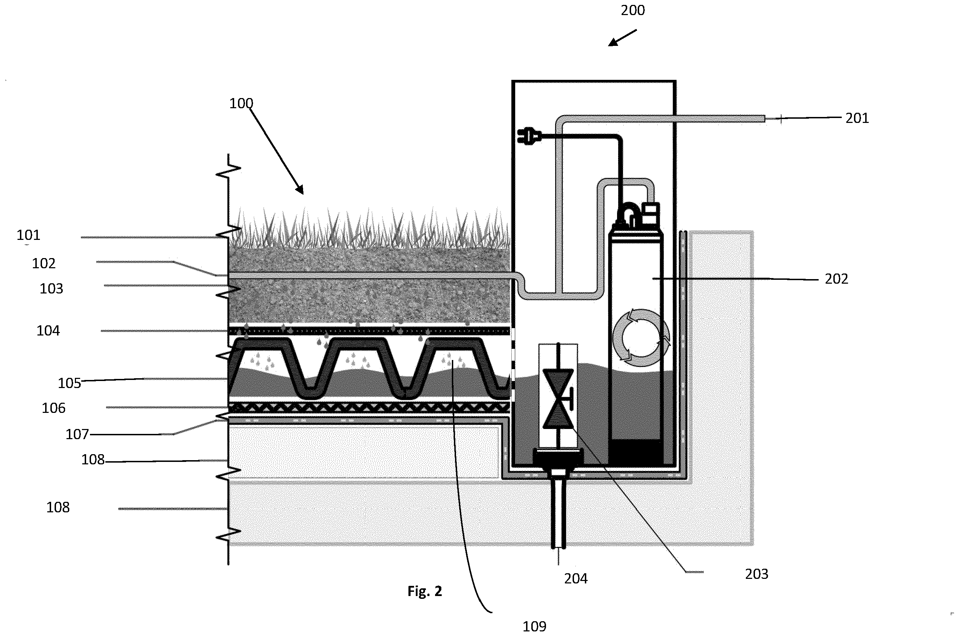

Die Figur 2 zeigt ein System in einer Sammelzone/Kammer 200, die aus einer Kammer/Zone mit einem Boden besteht, der ebenfalls mit einer undurchlässigen Schutzschicht ausgekleidet ist, wobei der Boden mindestens 5 cm unterhalb, vorzugsweise mindestens 15 cm, des Bodens angeordnet ist, der die Rückhaltekammer 109 bildet. Diese Kammer/Zone 200 kann mit der Rückhaltekammer 109 eine Einheit bilden oder nur durch eine Wand oder Elemente getrennt sein. Diese Kammer/Zone 200 umfasst eine Pumpe, insbesondere eine Tauchpumpe 202, die das Bewässerungssystem 102 mit Wasser aus der Kammer 109 speist. Weiterhin verfügt das erfindungsgemäße System über mindestens einen Abfluss 204 in der Rückhaltekammer 109 und/oder in der Sammelkammer 200.

Auf diese Weise vermeidet das erfindungsgemäße System 100 ein übermäßiges Vorhandensein von Wasser und kann immer eine Wasseroberfläche mit einem Freiraum in der Rückhaltekammer 109 aufrechterhalten und das Wasser ablassen, bevor der Frost/die Kälte eintritt, d.h. das Wasser gefriert.

Vorteilhafterweise wird die Wand der Kammer/Zone 200 durch eine beschichtete Kante 205 gebildet, so dass es sich um eine Seitenwand oder nur um eine Zwischenkante handeln kann, an die ein zweites erfindungsgemäßes System 100 angrenzt, wodurch mehrere Zonen der gleichen Fläche unterschiedlich verwaltet werden können. Dies kann insbesondere dann erforderlich sein, wenn sich die Vegetation zwischen Zone und Zone ändert und/oder wenn z. B. der Eigentümer wechselt.

Vorzugsweise kann die Trägerstruktur 105 aus einem Kunststoffmaterial bestehen und aus einzelnen Elementen gebildet werden, die z. B. durch einen Knopf oder ein Verriegelungssystem miteinander verbunden werden können, um eine Struktur entsprechend der erforderlichen Fläche zu bilden.

Vorteilhafterweise können die Elemente 105 durch eine Schicht aus erleichtertem Drainagezement oder ähnlichem verstärkt werden, um eine ebene und stabile Oberfläche zwischen der Schicht 104 und den Elementen 105 zu gewährleisten.

Der Rückhalteraum 109 hat vorteilhafterweise eine Mindesthöhe von 3 cm.

Vorteilhafterweise verfügt das System 200 über eine Wasserversorgung 201 mittels eines Wasserhahns oder dergleichen, oder die Versorgung kann Wasser im Kreislauf direkt in das Bewässerungssystem 102, d.h. stromabwärts der Tauchpumpe 202, einspeisen.

Vorzugsweise wird der Abfluss durch den Ablauf 204 mittels eines Ventils 203 geregelt.

Für den Schutzbereich des in den folgenden Ansprüchen definierten erfindungsgemäßen Gegenstandes können zahlreiche Varianten und Vorschläge vorgesehen werden.

In einer weiteren Ausführungsform kann ein System 100 mit einem weiterem Dachwasserrückhalte-, -speicher- und - Wasserrecyclingsystem verbunden werden, insbesondere mit einem Dachwasserrückhalte-, - speicher- und -Wasserrecyclingsystem welches alle Merkmale des erfindungsgemäßes System 100 aufweist außer einer Pumpe/Tauchpumpe. Dieses System 100 ist dabei unterhalb, d.h. auf einer unteren Ebene als das zweite System angeordnet ohne Pumpe.

Dies kann im selben Gebäude sein auf unterschiedlichen Stockwerken oder auf unterschiedlichen Gebäuden.

Die beiden Systeme sind über zumindest eine Leitung verbunden wobei in der Leitung zumindest ein Ventil angeordnet ist insbesondere ein Niederdruckventil. Dies ist vorteilhaft, da der Druck der in der Leitung entsteht durch eine Gefälle von z.B. 3 m (ein Stock eines Gebäude) Höhenunterschied nur circa 0,3 bar beträgt. Somit können zwei oder mehrere Systeme mit nur einer Pumpe ausgerüstet werden.

### Liste der Referenznummern

100 erfindungsgemäßes System
101 Vegetation
102 Bewässerungsanlage
103 Schicht aus Material, das für den Anbau von Vegetation geeignet ist, oder inertes Material/Kies
104 durchlässiger Filtervlies
105 Stützstruktur
106 Schutzschicht
107 wasserdichte und wurzelfeste Schicht
108 Außenfläche des Gebäudes
109 Rückhalteraum
200 Sammelkammer oder Sammelbereich
201 Wasserversorgung
202 Pumpe/Tauchpumpe
203 Ventil
204 Abfluss
205 Rand
206 Randkante

## Patentansprüche

1. System zur Rückhaltung, Speicherung und Rückführung von Wasser für Dächer (100), das eine erste Schicht (107) umfasst, die auf einer im Wesentlichen flachen Außenfläche (108) eines Gebäudes, vorzugsweise eines Daches oder dergleichen, angeordnet werden kann, wobei die erste Schicht (107) durch einen undurchlässigen Schutz gebildet wird, der gegen Pflanzenwurzeln, Vegetation und dergleichen beständig ist, wobei auf der ersten Schicht (107) eine zweite Schutzschicht (106) angeordnet ist, die durch eine Schicht oder ein Laminat gebildet wird, die/ das mit der undurchlässigen ersten Schicht (107) den Boden einer Rückhaltekammer (109) bildet, wobei auf der zweiten Schutzschicht (106) eine Struktur angeordnet ist, die aus einer Reihe von miteinander verbundenen Elementen gebildet ist, die eine Stützstruktur (105) bilden, wobei über der Stützstruktur (105) ein durchlässiges Filtervlies (104) angeordnet ist, das geeignet ist, das Wasser tropfenweise in die Rückhaltekammer (109) durchzulassen, wobei über dem Filtervlies (104) ein Substrat aus einem für die Vegetation geeigneten Material (103) oder ein Substrat aus einem inerten Material angeordnet ist und innerhalb dieser Schicht ein Bewässerungssystem (102) oder eine Schicht aus inertem Material (103), beispielsweise Kies, angeordnet ist, und wobei in der Rückhaltekammer (109) oder unmittelbar angrenzend daran ein Sammelbereich oder eine Sammelkammer (200) angeordnet ist, der/die mindestens eine Pumpe (202) umfasst, und wobei die Pumpe eine Tauchpumpe ist und wobei in der Rückhaltekammer (109) und/oder in dem Sammelbereich/der Sammelkammer (200) mindestens ein Abfluss (204) angeordnet ist, wobei der Boden des Sammelbereichs/der Sammelkammer (200) mindestens 5 cm tiefer, vorzugsweise mindestens 15 cm tiefer, als der die Rückhaltekammer (109) bildende Boden angeordnet ist.

2. Dachwasserrückhalte-, -speicher- und - Wasser recycling system (100) nach Anspruch 1, **dadurch gekennzeichnet, dass** die über dem filternden Vlies (104) angeordnete Schicht ein Substrat aus einem für das Wachstum von Vegetation geeigneten Material (103) ist und innerhalb dieser Schicht ein Vlies-Bewässerungssystem (102) angeordnet ist.

3. Dachwasserrückhalte-, Speicher- und Wasserrecyclingsystem (100) nach einem der vorhergehenden Ansprüche, **dadurch gekennzeichnet, dass** die Neigung des Bodens der Rückhaltekammer (109) weniger als 5° beträgt.

4. Dachwasserrückhalte-, -speicher- und - Wasser recycling system (100) nach einem der vorhergehenden Ansprüche, **dadurch gekennzeichnet, dass** das System ein externes Wasserversorgungssystem umfasst, das Wasser direkt in das Bewässerungssystem einspeist.

5. Dachwasserrückhalte-, -speicher- und - Wasser recycling system (100) nach einem der vorhergehenden Ansprüche, **dadurch gekennzeichnet, dass** die Rückhaltekammer (109) eine Mindesthöhe von mindestens 3 cm aufweist.

6. Dachwasserrückhalte-, -speicher- und - Wasser recycling system (100)nach einem der vorhergehenden Ansprüche, **dadurch gekennzeichnet, dass** der Abfluss (204) mittels eines Ventils (206) geregelt wird.

7. Dachwasserrückhalte-, -speicher- und - Wasserrecyclingsystem (100) nach einem der vorhergehenden Ansprüche, **dadurch gekennzeichnet, dass** es mit zumindest einen weiterem System zur Dachwasserrückhalte-, - speicher- und -Wasserrecyclingsystem über eine Leitung verbunden ist welches auf einer höheren Ebene angeordnet ist, wobei in der Leitung zumindest ein Ventil angeordnet ist.

8. Dachwasserrückhalte-, -speicher- und - Wasserrecyclingsystem (100) nach Anspruch 7, **dadurch gekennzeichnet, dass** das Ventil in der Leitung ein Niederdruckventil ist.

## Claims

1. System for retaining, storing and recycling water, for roofs (100), which comprises a first layer (107), which can be arranged on a substantially flat outer surface (108) of a building, preferably a roof or the like, wherein the first layer (107) is formed by an impermeable protection, which is resistant to plant roots, vegetation and the like, wherein a second protective layer (106), which is formed by a layer or a laminate which, with the impermeable first layer (107), forms the bottom of a retention chamber (109), is arranged on the first layer (107), wherein a structure, which is formed from a series of interconnected elements which form a support structure (105), is arranged on the second protective layer (106), wherein a permeable filter non-woven (104), which is suitable for allowing the water to pass through into the retention chamber (109) in drops, is arranged over the support structure (105), wherein a substrate made of a material (103) suitable for vegetation or a substrate made of an inert material is arranged over the filter non-woven (104) and an irrigation system (102) or a layer made of inert material (103), for example gravel, is arranged within this layer, and wherein a collecting area or a collecting chamber (200), which comprises at least one pump (202), wherein the pump is a submersible pump, is arranged in the retention chamber (109) or directly adjacent thereto, and wherein at least one discharge (204) is arranged in the retention chamber (109) and/or in the collecting area/collecting chamber (200), wherein the bottom of the collecting area/collecting chamber (200) is arranged at least 5 cm lower, preferably at least 15 cm lower, than the bottom forming the retention chamber (109).

2. Roof water retaining, storing and recycling system (100) according to claim 1, **characterized in that** the layer arranged over the filtering non-woven (104) is a substrate made of a material (103) suitable for growing vegetation and a non-woven irrigation system (102) is arranged within this layer.

3. Roof water retaining, storing and recycling system (100) according to one of the preceding claims, **characterized in that** the inclination of the bottom of the retention chamber (109) is less than 5°.

4. Roof water retaining, storing and recycling system (100) according to one of the preceding claims, **characterized in that** the system comprises an external water supply system, which feeds water directly into the irrigation system.

5. Roof water retaining, storing and recycling system (100) according to one of the preceding claims, **characterized in that** the retention chamber (109) has a minimum height of at least 3 cm.

6. Roof water retaining, storing and recycling system (100) according to one of the preceding claims, **characterized in that** the discharge (204) is regulated by means of a valve (206).

7. Roof water retaining, storing and recycling system (100) according to one of the preceding claims, **characterized in that** it is connected via a line to at least one further system for roof water retaining, storing and recycling system, which is arranged at a higher level, wherein at least one valve is arranged in the line.

8. Roof water retaining, storing and recycling system (100) according to claim 7, **characterized in that** the valve in the line is a low-pressure valve.

## Revendications

1. Système de retenue, stockage et recyclage d'eau pour des toits (100), qui comprend une première couche (107) qui peut être agencée sur une surface extérieure (108) sensiblement plate d'un bâtiment, de préférence d'un toit ou similaire, dans lequel la première couche (107) est formée par une protection imperméable qui est résistante aux racines de plante, à la végétation et similaires, dans lequel une deuxième couche de protection (106) est agencée sur la première couche (107), laquelle est formée par une couche ou un stratifié qui forme avec la première couche (107) imperméable le fond d'une chambre de retenue (109), dans lequel une structure est agencée sur la deuxième couche de protection (106), laquelle est formée par une rangée d'éléments reliés entre eux, lesquels forment une structure d'appui (105), dans lequel un non-tissé filtrant (104) perméable est agencé par le biais de la structure d'appui (105), lequel est apte à faire passer l'eau par gouttes dans la chambre de retenue (109), dans lequel un substrat en un matériau (103) approprié pour la végétation ou un substrat en un matériau inerte est agencé au-dessus du non-tissé filtrant (104) et un système d'irrigation (102) ou une couche de matériau inerte (103), par exemple du gravier, est agencée à l'intérieur de cette couche, et dans lequel une zone de collecte ou une chambre de collecte (200) est agencée dans la chambre de retenue (109) ou directement de manière contiguë à celle-ci, laquelle comprend au moins une pompe (202), et dans lequel la pompe est une pompe plongeante et dans lequel au moins un déversoir (204) est agencé dans la chambre de retenue (109) et/ou dans la zone de collecte/la chambre de collecte (200), dans lequel le fond de la zone de collecte/de la chambre de collecte (200) est agencé au moins 5 cm plus profondément, de préférence au moins 15 cm plus profondément, que le fond formant la chambre de retenue (109).

2. Système de retenue, stockage et recyclage d'eau pour des toits (100) selon la revendication 1, **caractérisé en ce que** la couche agencée au-dessus du non-tissé filtrant (104) est un substrat en un matériau (103) approprié pour la croissance de la végétation et un système d'irrigation de non-tissé (102) est agencé à l'intérieur de cette couche.

3. Système de retenue, stockage et recyclage d'eau pour des toits (100) selon l'une quelconque des revendications précédentes, **caractérisé en ce que** l'inclinaison du fond de la chambre de retenue (109) s'élève à moins de 5°.

4. Système de retenue, stockage et recyclage d'eau pour des toits (100) selon l'une quelconque des revendications précédentes, **caractérisé en ce que** le système comprend un système d'alimentation en eau externe qui injecte de l'eau directement dans le système d'irrigation.

5. Système de retenue, stockage et recyclage d'eau pour des toits (100) selon l'une quelconque des revendications précédentes, **caractérisé en ce que** la chambre de retenue (109) présente une hauteur minimale d'au moins 3 cm.

6. Système de retenue, stockage et recyclage d'eau pour des toits (100) selon l'une quelconque des revendications précédentes, **caractérisé en ce que** le déversoir (204) est régulé au moyen d'une vanne (206).

7. Système de retenue, stockage et recyclage d'eau pour des toits (100) selon l'une quelconque des revendications précédentes, **caractérisé en ce qu'**il est relié à au moins un autre système relatif au système de retenue, stockage et recyclage d'eau pour des toits par le biais d'une conduite qui est agencée sur un plan plus haut, dans lequel au moins une vanne est agencée dans la conduite.

8. Système de retenue, stockage et recyclage d'eau pour des toits (100) selon la revendication 7, **caractérisé en ce que** la vanne dans la conduite est une vanne basse pression.
